# EUROPEAN PATENT SPECIFICATION

(11) **EP 1 901 569 B1**
(45) Date of publication and mention of the grant of the patent: **17.02.2010**
(21) Application number: 06761333.1
(22) Date of filing: 30.06.2006
(51) Int. Cl.: H04W 4/06

(54) **METHOD FOR TRANSMITTING SHORT DATA DURING GROUP CALL IN WIRELESS COMMUNICATION SYSTEM**
VERFAHREN ZUM SENDEN KURZER DATEN WÄHREND EINER GRUPPENVERBINDUNG IN EINEM DRAHTLOSEN KOMMUNIKATIONSSYSTEM
PROCEDE POUR TRANSMETTRE DES DONNEES COURTES PENDANT UN APPEL DE GROUPE DANS UN SYSTEME DE COMMUNICATION SANS FIL

(30) Priority: 02.07.2005 CN 200510035773
(43) Date of publication of application: 19.03.2008
(73) Proprietor: Huawei Technologies Co., Ltd., Longgang District Shenzhen, Guangdong Province, 518129 (CN)
(72) Inventor: SONG, Limin, Shenzhen, Guangdong Province 518129 (CN); YANG, Changdong, Shenzhen, Guangdong Province 518129 (CN); LI, Zheng, Shenzhen, Guangdong Province 518129 (CN); XU, Liang, Shenzhen, Guangdong Province 518129 (CN); YANG, Haiquan, Shenzhen, Guangdong Province 518129 (CN); TANG, Xiaotian, Shenzhen, Guangdong Province 518129 (CN); HOU, Zhiqiang, Shenzhen, Guangdong Province 518129 (CN); WANG, He, Shenzhen, Guangdong Province 518129 (CN)
(74) Representative: Thun, Clemens
(86) International application number: PCT/CN2006/001522
(87) International publication number: WO 2007/003126

(56) References cited:
- EP-A2- 0 833 531
- CN-A- 1 242 914
- CN-A- 1 627 861
- GB-A- 2 327 571
- US-B1- 6 289 223
- MOULY ET PAUTET: "The GSM System for Mobile Communications" ISBN: 2-9507190-0-7, 1 January 1992 (1992-01-01), pages 420-423, XP002502998

## Description

### Field of the Invention

The present invention relates to wireless communication technology for group call, and more particularly, to a method for implementing transmission of voice and data in group call.

### Background of the Invention

Global System for Mobile communication (GSM) is a standard uniformly proposed by European Committee for Standardization in 1992. GSM may ensure communication quality and develop more and more new services for the subscribers by employing digital communication technology and uniform network standard.

GSM-Railway (GSM-R) is a GSM system serving for railway, and it provides a universal communication platform for railway operational staff. GSM-R can be used as railway control system, so as to meet the current requirement and the future growing requirement of the railway network. GSM-R is a system which is designed, constructed and used for directly serving railway transportation and production and railway informatization. The main functions implemented by GSM-R are railway dispatching communication, station-yard communication, emergency communication, division communication, official communication and transportation information transmission, etc.

Voice service in train dispatching may provide voice communication service for the railway transportation control and implement point to point call, point to point emergency call, broadcast call, group call, railway emergency call, and multi-party talks according to their priority levels, for example, by using the functions of GSM-R system such as function addressing, position-based addressing, group call, broadcast call and emergency call.

The train dispatching communication is the most important application of the GSM-R system in railway dedicated communication. Compared with conventional train dispatching communication system, the GSM-R train dispatching communication achieves "convergence" of conventional wired dispatching and wireless dispatching, and optimizes the train dispatching communication networks. The outstanding advantage of the GSM-R train dispatching communication is the voice service that a call could be conducted in train run number and addressing manner. The main subscribers of the train dispatching communication includes train dispatcher, station operator on duty, train driver, train guard, assistant operator on duty, locomotive depot (back-turning section) operator on duty, and train section operator on duty.

The train dispatcher may perform operations of voice broadcasting and emergency group call; the station operator on duty may perform operations of group call and emergency group call; the train driver may perform operation of emergency group call.

However, the current GSM-based wireless communication system with group call function can not transmit short data simultaneously during speaking, i.e. data and voice can not be transmitted simultaneously. Therefore, those services requiring simultaneous transmission of data and voice, such as flat shunting, may not be implemented. The term "data" here refers to short data, and such short data is generally a short message with a fixed length and predefined content. The time delay of the short data transmission is required to be short (generally within 500 ms), such as in flat shunting service in GSM-R.
US 6 289 223 B1 discloses a system and method in a telecommunications system for enabling an originating mobile unit to deliver SMS messages to a select plurality of destination mobile units.

### Summary of the Invention

In view of the above, a main object of the present invention is to provide a method for transmitting short data in group call in a wireless communication system so that simultaneous transmission of voice and data in group call may be implemented.

In order to achieve the above object, the present invention provides a method for transmitting short data in group call in a wireless communication system, including:
sending, by a subscriber device, an uplink channel request to a network side device through an uplink channel, if the uplink channel is not occupied by any other subscriber device when short data is needed to be transmitted;
allowing, by the network side device, the subscriber device to occupy the uplink channel in response to the uplink channel request;
reporting, by the subscriber device, layer 3 information including the short data and the subscriber device's ID;
broadcasting, by the network side device, the short data in a group call channel, and
releasing, by the network side device, the uplink channel.

The wireless communication system is a GSM based system with wireless group call function, and comprises GSM-R or GT800 system.

Further, in the method, the group call channel for broadcasting the short data may be a Fast Associated Control CHaimel (FACCH) or a Slow Associated Control CHannel (SACCH).

Further, in the method, the content of the short data may be safety data for flat shunting.

Further, in the method, the network side device may be a base station controller.

The present invention further provides a method for transmitting short data in group call in a wireless communication system, including:
sending, by a subscriber device, a channel request to a network side device on a random access channel, if an uplink channel is occupied by any other subscriber device when short data is needed to he transmitted;
assigning, by the network side device, a sub time slot of a Stand-alone Dedicated Control CHannel (SDCCH) to the subscriber device in response to the channel request;
reporting, by the subscriber device, layer 3 information through the assigned sub time slot, the layer 3 information including the short data, a group call ID, and the subscriber device's ID;
broadcasting, by the network side device, the short data on a corresponding group call channel according to the group call ID in the layer 3 information, on receipt of the layer 3 information;
assigning, by the network side device, the subscriber device to return to the group call channel: and
releasing by the network side device, the sub time slot of the SDCCH.

The wireless communication system is a GSM based system with wireless group call function, and includes GSM-R or GT800 system.

Further, in the method, the content of the short data may be safety data for flat shunting.

Further, in the method, the network side device may be a base station controller.

From a comparison with prior art, the difference between the technical solution of the embodiment of the present invention and that of prior art is that: if the uplink channel is not occupied by any other subscriber device, the subscriber device which needs to transmit short data reports layer 3 information including the short data after occupying the uplink channel through request procedure; the network side device responses to the layer 3 information, broadcasts the short data on an FACCH or SACCH, and releases the subscriber device's occupation of the uplink channel.

If the uplink channel is occupied by any other subscriber device, the subscriber device which needs to transmit short data is assigned a sub time slot of an SDCCH by the network side device through request procedure, and it reports layer 3 information including the short data through the sub time slot; the network side device responses to the layer 3 information, broadcasts the short data on a group call channel, and releases the occupation of the SDCCH.

The difference in the technical solutions brings obviously beneficial effects, i.e. simultaneous transmission of voice and data in a group call channel in a GSM based wireless group call system (e.g. GSM-R or GT800) may be implemented and simultaneous transmission of short data during speaking may be implemented. When the present invention is applied in GSM-R, it may effectively maintain voice intercommunication uninterrupted when safety data being transmitted in real time, and may provide a reliable technology basis for the implementation of flat shunting specification.

### Brief Descriptions of the Drawings

Figure 1 is a schematic flow chart of a method for transmitting short data in group call according to one embodiment of the present invention;

Figure 2 is a schematic signaling flow chart at a non-speaker cell in the method for transmitting short data in group call according to one embodiment of the present invention; and

Figure 3 is a schematic signaling flow chart at a speaker cell in the method for transmitting short data in group call according to one embodiment of the present invention.

### Detailed Descriptions of the Embodiments

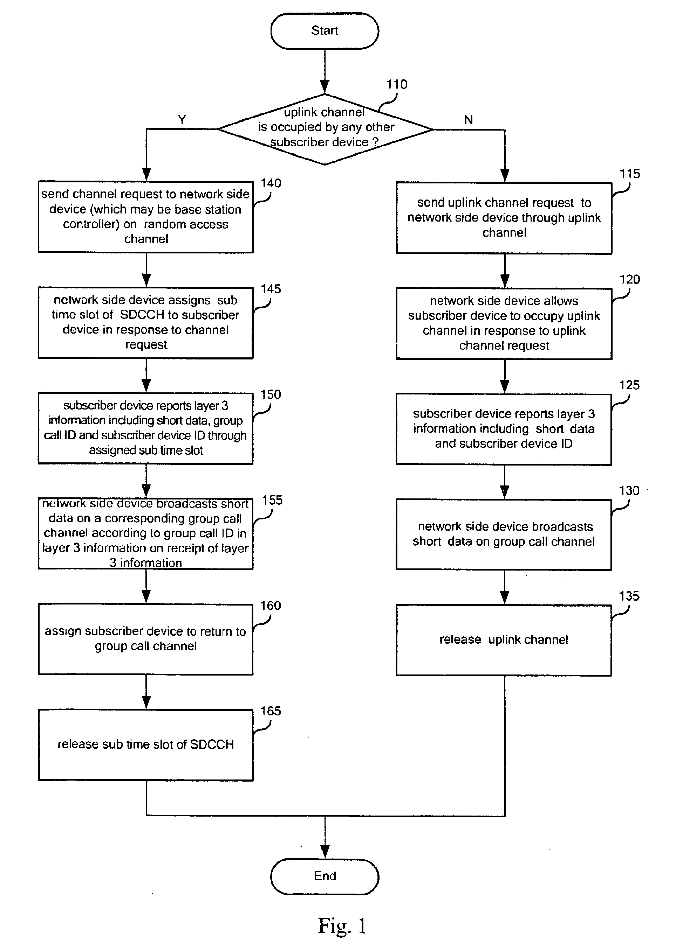

In order to make the objects, technical solutions, and advantages of present invention more clearly, the present invention is further described in detail below in conjunction with Figures 1 to 3.

First of all, the term "wireless communication system" in the present invention refers to a GSM-based system with wireless group call function, including GSM-R, GT800 system. The present invention can be applied to flat shunting service with simultaneous transmission of data and voice. The short data may be safety data for flat shunting.

In particular, subscriber devices in a group share an uplink channel on GSM-R platform, if simultaneous transmission of data and voice is to be implemented, cells could be divided into speaker cells and non-speaker cells according to the action of subscriber devices. GSM has a concept of time slot, and each time slot may be a speaker cell for a physical cell. In a non-spcaker cell, the uplink channel is free for transmitting the short data, while in a speaker cell, a subscriber device may use an SDCCH to transmit the short data.

The flow of a method for transmitting short data in group call according to one embodiment of the present invention, as shown in Figure 1, is specified as follows:

Firstly, at step 110, when a subscriber device needs to transmit short data, the subscriber device determines whether the uplink channel is occupied by any other subscriber device or not (by using uplink free message UPLINK FREE or uplink busy message PLINK BUSY). If the uplink channel is occupied by the subscriber device, then the flow proceeds to step 140; otherwise, the flow proceeds to step 115.

At step 115, because the uplink channel is not occupied by any other subscriber device (i.e.. the current cell is in a non-speaker cell state), the subscriber device sends an uplink channel request to a network side device through the uplink channel. In this embodiment, the network side device is a base station controller.

Then, at step 120, the network side device allows the subscriber device to occupy the uplink channel in response to the uplink channel request.

At step 125, the subscriber device reports layer 3 information, which includes the short data and the subscriber device's ID.

Subsequently, at step 130, the network side device broadcasts the short data on a group call channel.

At step 135, the network side device releases the uplink channel.

It can be seen that in the embodiment of the present invention, when the uplink channel is not occupied by any other subscriber device, the subscriber device which needs to transmit short data reports the layer 3 information including the short data aster occupying the uplink channel through request procedure, the network side device responses to the layer 3 information, broadcasts the short data on an FACCH or SACCH, and releases the uplink channel.

If it is determined at step 110 that the uplink channel is occupied by any other subscriber device, it is indicated that the current cell is in a speaker cell state. In this case, because the uplink channel is occupied by a speaker, if the current subscriber device needs to transmit short data command, this transmission may be implemented on an SDCCH. The network will assign a sub time slot of the SDCCH to the subscriber device. The subscriber device reports layer 3 information through the sub time slot of the SDCCH, and the layer 3 information includes the subscriber device's ID, a group call ID, and an operation command. The particular procedure is specified in another embodiment of the present invention as follows:

At step 140, a channel request is sent to the network side device on a random access channel.

At step 145, the network side device assigns a sub time slot of an SDCCH to the subscriber device in response to the channel request.

At step 150, the subscriber device reports layer 3 information through the assigned sub time slot, and the layer 3 information includes the short data, a group call ID, and the subscriber device's ID.

At step 155, the network side device broadcasts the short data on a corresponding group call channel according to the group call ID in the layer 3 information on receipt of the layer 3 information.

At step 160, the subscriber device is assigned to return to the group call channel.

At step 165, the sub time slot of the SDCCH is released.

It can be seen in the present embodiment of the invention that when the uplink channel is occupied by any other subscriber device, the subscriber device which needs to transmit short data is assigned a sub time slot of an SDCCH by the network side device through request procedure; the layer 3 information including short data is reported in the sub time slot; the network side device broadcasts the short data on a group call channel in response to the layer 3 information, and releases the sub time slot of the SDCCH.

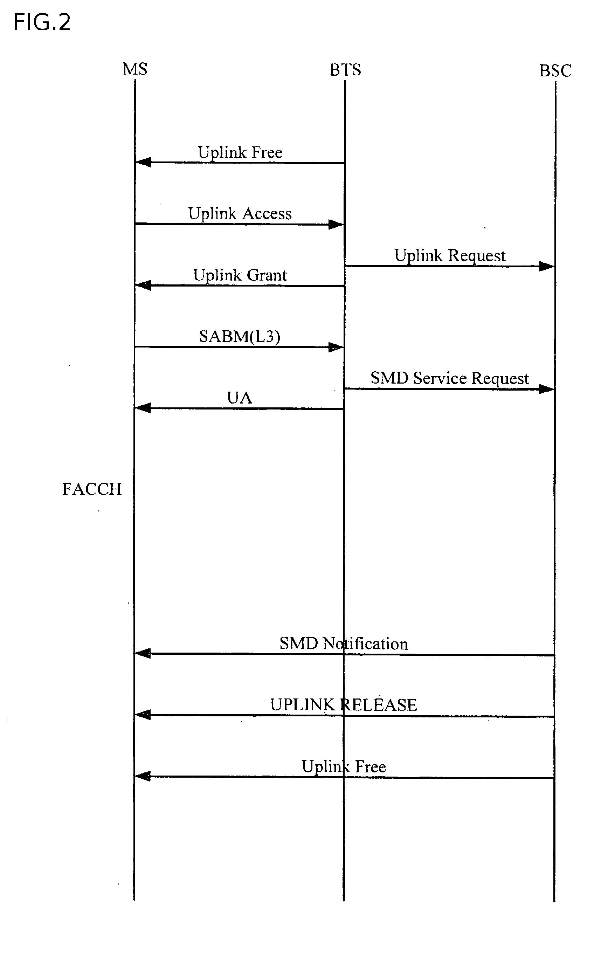

Figure 2 is a schematic signaling diagram of short data transmission when a subscriber device needs to transmit short data and the uplink channel is not occupied by any other subscriber device (i.e., the subscriber device is in the non-speaker cell). Figure 2 corresponds to step 115 to step 135 of Figure 1. The relevant signaling messages in Figure 2 are explained as follows:
"Uplink Free", which indicates that the uplink is free;
"Uplink Access", through which the listener requests for occupying the uplink;
"Uplink Request", which is used to report an uplink request;
"Uplink Grant", which is transmitted on a group call channel by the base station in response to the Uplink Request;
"SABM(L3)", a Set Asynchronous Balanced Mode (SABM) frame reported by the subscriber device requesting to send short data, which includes subscriber device information and safety command message.
TALKER INDICATION message may be extended to add safety command information occupying 1 byte, and the new message could be defined as "SMD Service Request";
"SMD Service Request", a short data service request, which is used by the BTS to request short data service from the BSC. When the BSC receives the message, it constructs an SMD Notification to be transmitted on a group call channel (see below);
"UA", which is transmitted by the base station in response to the SABM;
"SMD Notification", a broadcast message transmitted on a group call channel, which includes subscriber device information MSISDN or IMSI, and short data;
"UPLINK RELEASE", which is transmitted on an FACCH by the BSC upon receipt of a layer 3 message, and releases the uplink;
"Uplink Free", which indicates that the uplink is free.

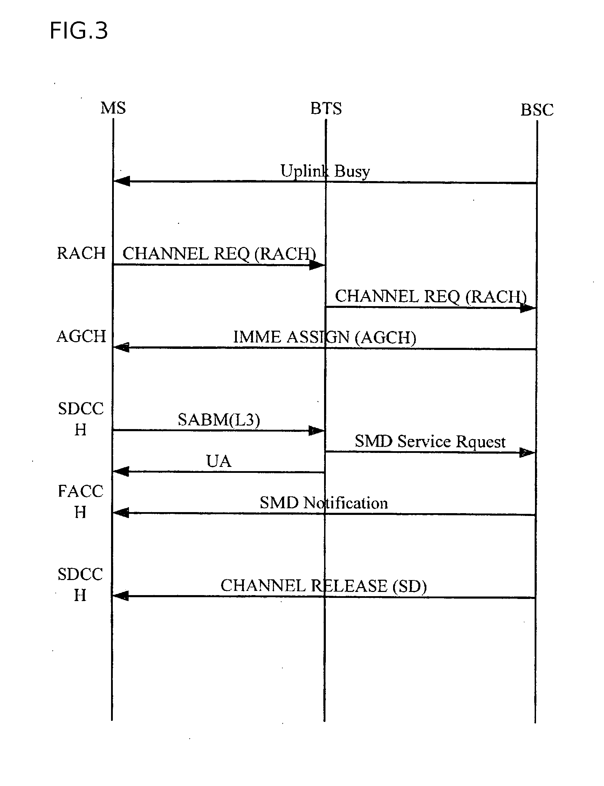

Figure 3 shows a schematic signaling diagram of short data transmission when a subscriber device needs to transmit short data and the uplink channel is occupied by any other subscriber device (i.e., the subscriber device is in a speaker cell). Figure 3 corresponds to step 140 to step 165 of Figure 1. The relevant signaling messages in Figure 3 are explained as follows:
"Uplink Busy", which indicates that the uplink is busy;
"CHANNEL REQ(RACH)", through which the subscriber device sends a channel request on a RANCH to request for a channel for transmitting short data after leaving the group call channel;
"IMMF ASSIGN(AGCH)", through which the BSC assigns an SDCCH to the subscriber device for transmitting short data;
"SABM(L3)", an SABM frame reported by the subscriber device requesting to send shot data, which includes subscriber device information and short data;
"SMD Service Request", a short data service request, which is used by the BTS to request short data service from the BSC. When the BSC receives the message, it constructs an SMD Notification to be transmitted on a group call channel;
"UA", which is transmitted by the base station in response to the SABM;
"SMD Notification", a broadcast message transmitted on a group call channel, which includes subscriber device information IMSI and short data;
"CHANNEL RELEASE(SD)", which is used to release SDCCH and assign the subscriber device to return to a group call channel.

Through the above explanation and analysis, it can be understood that according to the principle of the present invention, it is possible to implement simultaneous transmission of voice and data on a group call channel in a GSM-based wireless group call system, such as GSM-R or GT800, and short data transmission during speaking. When the present invention is applied in GSM-R, it may effectively maintain voice intercommunication uninterrupted during the transmission of safety data in real time, and provide a reliable technology basis for the implementation of flat shunting specification.

Although the present invention has been illustrated and described with reference to the preferred embodiments of the present invention, those ordinary skilled in the art shall appreciate that various modifications in form and detail may be made without departing from the scope of the invention.

## Claims

1. A method for transmitting short data in group call in a wireless communication system, comprising:
sending (115), by a subscriber device, an uplink channel request to a network side device through an uplink channel, if the uplink channel is not occupied by any other subscriber device when short data is needed to be transmitted;
allowing (120), by the network side device, the subscriber device to occupy the uplink channel in response to the uplink channel request;
reporting (125), by the subscriber device, layer 3 information comprising the short data and the subscriber device's ID;
broadcasting (130), by the network side device, the short data on a group call channel; and
releasing (135), by the network side device, the uplink channel.

2. The method for transmitting short data in group call in a wireless communication system as claimed in claim 1, wherein the wireless communication system is a Global System for Mobile communication, GSM, based system with wireless group call function, comprising Global System for Mobile communication-Railway, GSM-R, system and GT800 system.

3. The method for transmitting short data in group call in a wireless communication system as claimed in claim 2, wherein the group call channel for broadcasting the short data is a Fast Associated Control CHannel, FACCH, or a Slow Associated Control CHannel, SACCH.

4. The method for transmitting short data in group call in a wireless communication system as claimed in claim 2, wherein the content of the short data is safety data for flat shunting.

5. The method for transmitting short data in group call in a wireless communication system as claimed in claim 2, wherein the network side device is a base station controller.

6. A method for transmitting short data in group call in a wireless communication system, comprising:
sending (140), by a subscriber device, a channel request to a network side device on a random access channel, if an uplink channel is occupied by any other subscriber when short data is needed to be transmitted;
assigning (145), by the network side device, a sub time slot of a Stand-alone Dedicated Control CHannel, SDCCH, to the subscriber device in response to the channel request; reporting (150), by the subscriber device, layer 3 information through the assigned sub time slot, the layer 3 information comprising the short data, a group call ID, and the subscriber device's ID;
broadcasting (155), by the network side device, the short data on a corresponding group call channel according to the group call ID in the layer 3 information, on receipt of the layer 3 information;
assigning (160), by the network side device, the subscriber device to return to the group call channel; and
releasing (165), by the network side device, the sub time slot of the SDCCH.

7. The method for transmitting short data in group call in a wireless communication system as claimed in claim 6, wherein the wireless communication system is a Global System for Mobile communication, GSM, based system with wireless group call function, comprising Global System for Mobile communication-Railway, GSM-R, system and GT800 system.

8. The method for transmitting short data in group call in a wireless communication system as claimed in claim 7, wherein the content of the short data is safety data for flat shunting.

9. The method for transmitting short data in group call in a wireless communication system as claimed in claim 7, wherein the network side device is a base station controller.

## Patentansprüche

1. Verfahren zum Senden von Kurzdaten in einer Gruppenverbindung in einem drahtlosen Kommunikationssystem, mit den folgenden Schritten:
Senden (115) einer Aufwärtsstreckenkanalanforderung durch eine Teilnehmereinrichtung zu einer netzseitigen Einrichtung durch einen Aufwärtsstreckenkanal, wenn der Aufwärtsstreckenkanal von keiner anderen Teilnehmereinrichtung belegt ist, wenn Kurzdaten gesendet werden müssen;
Erlauben (120) durch die netzseitige Einrichtung, dass die Teilnehmereinrichtung den Aufwärtsstreckenkanal belegt, als Reaktion auf die Aufwärtsstreckenkanalanforderung;
Melden (125) von Informationen der Schicht 3, die die Kurzdaten und die ID der Teilnehmereinrichtung umfassen, durch die Teilnehmereinrichtung;
Rundsenden (130) der Kurzdaten auf einem Gruppenverbindungskanal durch die netzseitige Einrichtung; und
Freigeben (135) des Aufwärtsstreckenkanals durch die netzseitige Einrichtung.

2. Verfahren zum Senden von Kurzdaten in einer Gruppenverbindung in einem drahtlosen Kommunikationssystem nach Anspruch 1, wobei das drahtlose Kommunikationssystem ein System auf der Basis des Global System for Mobile communication GSM mit drahtloser Gruppenverbindungsfunktion ist, umfassend das Global System for Mobile communication-Railway GSM-R und das GT800-System.

3. Verfahren zum Senden von Kurzdaten in einer Gruppenverbindung in einem drahtlosen Kommunikationssystem nach Anspruch 2, wobei der Gruppenverbindungskanal zum Rundsenden der Kurzdaten ein Fast Associated Control CHannel FACCH oder ein Slow Associated Control CHannel SACCH ist.

4. Verfahren zum Senden von Kurzdaten in einer Gruppenverbindung in einem drahtlosen Kommunikationssystem nach Anspruch 2, wobei es sich bei dem Inhalt der Kurzdaten um Sicherheitsdaten für Flat Shunting handelt.

5. Verfahren zum Senden von Kurzdaten in einer Gruppenverbindung in einem drahtlosen Kommunikationssystem nach Anspruch 2, wobei die netzseitige Einrichtung eine Basisstationssteuerung ist.

6. Verfahren zum Senden von Kurzdaten in einer Gruppenverbindung in einem drahtlosen Kommunikationssystem, mit den folgenden Schritten:
Senden (140) einer Kanalanforderung zu einer netzseitigen Einrichtung durch eine Teilnehmereinrichtung auf einem Direktzugriffskanal, wenn ein Aufwärtsstreckenkanal von einem anderen Teilnehmer belegt ist, wenn Kurzdaten gesendet werden müssen;
Zuweisen (145) eines Sub-Zeitschlitzes eines Stand-alone Dedicated Control CHannel SDCCH durch die netzseitige Einrichtung an die Teilnehmeranrichtung als Reaktion auf die Kanalanforderung;
Melden (150) von Informationen der Schicht 3 durch die Teilnehmereinrichtung durch den zugewiesenen Sub-Zeitschlitz, wobei die Informationen der Schicht 3 die Kurzdaten, eine Gruppenverbindungs-ID und die ID der Teilnehmereinrichtung umfassen;
Rundsenden (155) der Kurzdaten auf einem entsprechenden Gruppenverbindungskanal durch die netzseitige Einrichtung gemäß der Gruppenverbindungs-ID in den Informationen der Schicht 3 beim Empfang der Informationen der Schicht 3;
Zuweisen (160) der Teilnehmereinrichtung, zu dem Gruppenverbindungskanal zurückzukehren, durch die netzseitige Einrichtung; und
Freigeben (165) des Sub-Zeitschlitzes des SDCCH durch die netzseitige Einrichtung.

7. Verfahren zum Senden von Kurzdaten in einer Gruppenverbindung in einem drahtlosen Kommunikationssystem nach Anspruch 6, wobei das drahtlose Kommunikationssystem ein System auf der Basis des Global System for Mobile communication GSM mit drahtloser Gruppenverbindungsfunktion ist, umfassend das Global System for Mobile communication-Railway GSM-R und das GT800-System.

8. Verfahren zum Senden von Kurzdaten in einer Gruppenverbindung in einem drahtlosen Kommunikationssystem nach Anspruch 7, wobei es sich bei dem Inhalt der Kurzdaten um Sicherheitsdaten für Flat Shunting handelt.

9. Verfahren zum Senden von Kurzdaten in einer Gruppenverbindung in einem drahtlosen Kommunikationssystem nach Anspruch 7, wobei die netzseitige Einrichtung eine Basisstationssteuerung ist.

## Revendications

1. Procédé de transmission de données courtes dans un appel de groupe dans un système de communications sans fil, comprenant :
l'envoi (115), par un dispositif abonné, d'une requête de canal montant à un dispositif côté réseau par le biais d'un canal montant, si le canal montant n'est pas occupé par un autre dispositif abonné quand des données courtes doivent être transmises ;
la permission (120), par le dispositif côté réseau, au dispositif abonné d'occuper le canal montant en réponse à la requête de canal montant ;
la déclaration (125) par le dispositif abonné, d'informations de couche 3 comprenant les données courtes et l'ID du dispositif abonné ;
la diffusion (130), par le dispositif côté réseau, des données courtes sur un canal d'appel de groupe ; et
la libération (135) par le dispositif côté réseau, du canal montant.

2. Procédé de transmission de données courtes dans un appel de groupe dans un système de communications sans fil selon la revendication 1, dans lequel le système de communications sans fil est un système basé sur le système GSM, (Global System for Mobile communication), à fonction d'appel de groupe sans fil, comprenant un système GSM-R, (Global System for Mobile communication-Railway), et un système GT800.

3. Procédé de transmission de données courtes dans un appel de groupe dans un système de communications sans fil selon la revendication 2, dans lequel le canal d'appel de groupe pour la diffusion des données courtes est un Canal de Contrôle Associé Rapide, FACCH (Fast Associated Control CHannel), ou un Canal de Contrôle Associé Lent, SACCH (Slow Associated Control CHannel).

4. Procédé de transmission de données courtes dans un appel de groupe dans un système de communications sans fil selon la revendication 2, dans lequel le contenu des données courtes est constitué par des données de sécurité pour un débranchement en paliers.

5. Procédé de transmission de données courtes dans un appel de groupe dans un système de communications sans fil selon la revendication 2, dans lequel le dispositif côté réseau est une unité de commande de station de base.

6. Procédé de transmission de données courtes dans un appel de groupe dans un système de communications sans fil comprenant :
l'envoi (140), par un dispositif abonné, d'une requête de canal à un dispositif côté réseau sur un canal d'accès aléatoire, si un canal montant est occupé par un autre dispositif abonné quand des données courtes doivent être transmises ;
l'assignation (145), par le dispositif côté réseau, d'une sous-tranche de temps d'un Canal de Commande Dédié Autonome, SDCCH, (Stand-alone Dedicated Control CHannel), au dispositif abonné en réponse à la requête de canal ;
la déclaration (150) par le dispositif abonné, d'informations de couche 3 par le biais de la sous-tranche de temps assignée, les informations de couche 3 comprenant les données courtes, une ID d'appel de groupe et l'ID du dispositif abonné ;
la diffusion (155), par le dispositif côté réseau, des données courtes sur un canal d'appel de groupe correspondant en fonction de l'ID d'appel de groupe dans les informations de couche 3, sur réception des informations de couche 3 ;
l'assignation (160), par le dispositif côté réseau, au dispositif abonné de revenir sur le canal d'appel de groupe ; et
la libération (165) par le dispositif côté réseau de la sous-tranche de temps du SDCCH.

7. Procédé de transmission de données courtes dans un appel de groupe dans un système de communications sans fil selon la revendication 6, dans lequel le système de communications sans fil est un système basé sur le système GSM, (Global System for Mobile communication), à fonction d'appel de groupe sans fil, comprenant un système GSM-R, (Global System for Mobile communication-Railway), et un système GT800.

8. Procédé de transmission de données courtes dans un appel de groupe dans un système de communications sans fil selon la revendication 7, dans lequel le contenu des données courtes est constitué par des données de sécurité pour un débranchement en paliers.

9. Procédé de transmission de données courtes dans un appel de groupe dans un système de communications sans fil selon la revendication 7, dans lequel le dispositif côté réseau est une unité de commande de station de base.
